(19) Europäisches Patentamt
European Patent Office
Office européen des brevets

(11) **EP 2 626 725 B1**

(12) **FASCICULE DE BREVET EUROPEEN**

(45) Date de publication et mention de la délivrance du brevet:
**18.11.2015 Bulletin 2015/47**

(21) Numéro de dépôt: **13154346.4**

(22) Date de dépôt: **07.02.2013**

(51) Int Cl.:
*G01S 19/49* (2010.01)    *G01S 19/22* (2010.01)
*G01S 19/50* (2010.01)

(54) **Procédé de détermination d'un indicateur de confiance relatif à la trajectoire empruntée par un mobile**

Bestimmungsverfahren einer Verlässlichkeitsanzeige in Bezug auf die eingeschlagene Bewegungsbahn eines mobilen Geräts

Method for determining a confidence indicator relating to the path taken by a mobile

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.02.2012 FR 1200397**

(43) Date de publication de la demande:
**14.08.2013 Bulletin 2013/33**

(73) Titulaires:
• **Thales**
  **92200 Neuilly Sur Seine (FR)**
• **CENTRE NATIONAL D'ETUDES SPATIALES**
  **75001 Paris (FR)**

(72) Inventeurs:
• **Monnerat, Michel**
  **31240 Saint Jean (FR)**
• **Ries, Lionel**
  **81290 Viviers les Montagnes (FR)**

(74) Mandataire: **Nguyen, Dominique et al**
**Marks & Clerk France**
**Immeuble Visium**
**22, avenue Aristide Briand**
**94117 Arcueil Cedex (FR)**

(56) Documents cités:
**EP-A1- 1 712 930      US-A- 5 414 729**
**US-A1- 2010 332 125   US-B1- 6 252 863**

## Description

La présente invention concerne un procédé de détermination d'un indicateur de confiance relatif à la trajectoire d'un mobile. L'invention s'applique à tout système de positionnement par satellites utilisant des récepteurs de type GNSS (Global Navigation Satellite System) tels que des récepteurs GPS (Global Positioning System) ou Galileo.

Dans un système de positionnement par satellites utilisant un récepteur du type GNSS disposé à bord d'un mobile, les signaux de données permettant au récepteur de calculer son positionnement proviennent de différents satellites appartenant à une constellation de satellites de positionnement. La constellation comporte au moins quatre satellites pour déterminer quatre inconnues correspondant aux coordonnées géographiques x, y, z et temporelles t du récepteur. Le positionnement du mobile par le récepteur est réalisé en deux étapes. Dans une première étape, le récepteur fait l'acquisition de signaux radioélectriques constituant des signaux de navigation provenant des quatre satellites de la constellation et dans une deuxième étape, le récepteur évalue les distances séparant le mobile des quatre satellites dont les signaux ont été reçus et détermine la position du mobile en utilisant un procédé par triangulation.

Le document US 2010/0332125 décrit un tel système de positionnement par satellites.

Une erreur commise sur la position d'un mobile peut avoir des conséquences désastreuses dans une application concernant l'aviation civile ou le péage routier géo-localisé.

Il existe de nombreuses sources d'erreur de positionnement pouvant entacher la validité des informations de position déterminées par un système de positionnement par satellite. Une erreur de positionnement peut être due à un problème technique sur la réception des signaux GNSS, tel que par exemple une défaillance du récepteur ou une défaillance des informations transmises par la constellation de satellites utilisée. La fiabilité de la position déterminée par un système de positionnement par satellite dépend également de l'environnement dans lequel se trouve le mobile.

Dans le cas d'une application aéronautique concernant l'aviation civile, le récepteur n'est contraint par aucun obstacle, de sorte que les signaux radioélectriques sont reçus directement des satellites, sans réflexion sur aucune paroi. Dans ce cas, il existe des systèmes SBAS (en anglais : Satellite-Based Augmentation Systems) permettant de fournir une information de confiance relative à la position calculée par le récepteur d'un mobile aéronautique. Les systèmes SBAS contrôlent et bornent en permanence les erreurs commises sur l'orbite des satellites, sur la synchronisation de chaque satellite avec la référence horaire des constellations et les erreurs induites par la propagation des signaux radioélectriques en haute atmosphère et en particulier dans l'Ionosphère. Les informations fournies par un système SBAS permettent au récepteur du mobile aéronautique de fournir la position du mobile ainsi qu'une borne d'erreur de position.

Les applications de péage routier géo-localisé consistent à déterminer la route empruntée par un mobile terrestre muni d'un récepteur GNSS et à facturer un utilisateur du mobile terrestre lorsque la route empruntée est soumise à un péage. La facturation dépendant de la route utilisée, le récepteur doit délivrer deux informations complémentaires concernant d'une part, la position du mobile et d'autre part, la trajectoire du mobile. Ces informations donnant lieu à une facturation, il est également nécessaire de déterminer une information de confiance concernant la trajectoire utilisée.

Cependant, dans le cas d'une application concernant le péage routier géo-localisé, les conditions de réception des signaux radioélectriques sont beaucoup plus complexes, et beaucoup moins maitrisées que dans le cas d'une application aéronautique. Il est alors beaucoup plus difficile de borner l'erreur de position déterminée par le récepteur.

En milieu urbain, les signaux de navigation émis par l'un ou par deux ou trois des satellites de la constellation peuvent par exemple être arrêtés par des immeubles et ne pas parvenir jusqu'au récepteur du mobile. Dans ce cas, la géométrie de l'ensemble des satellites utilisés pour calculer la position du mobile est affectée ce qui peut rendre le calcul de la position du mobile impossible.

De même, dans un milieu terrestre peu favorable, les signaux de navigation émis par un satellite de la constellation peuvent se réfléchir sur certaines parois avant d'atteindre le récepteur. Ce phénomène, appelé multi-trajet, a un impact important sur la précision de la position calculée par le récepteur. En effet, le chemin mesuré par le récepteur est alors plus long que la distance séparant le mobile du satellite correspondant. Il en résulte une erreur sur le procédé de triangulation et donc sur la position du mobile. Dans ce cas la conséquence est double car d'une part, l'erreur de position est importante et d'autre part, le récepteur n'a aucun moyen de savoir qu'il a commis une erreur, ni d'évaluer l'erreur commise. Or les erreurs commises par le récepteur peuvent induire une erreur de jugement quant à la route empruntée et par conséquent induire une fausse facturation. Il est donc nécessaire d'obtenir un indicateur de confiance concernant la trajectoire du mobile déterminée par le récepteur.

L'invention a pour but de résoudre ces problèmes et de proposer un procédé de détermination d'un indicateur de confiance relatif à la trajectoire empruntée par un mobile permettant d'évaluer une erreur dans l'estimation de la position du mobile commise par un récepteur GNSS situé à bord du mobile.

Pour cela, l'invention concerne un procédé de détermination d'un indicateur de confiance relatif à la trajectoire d'un mobile équipé d'un récepteur apte à estimer la position du mobile à partir de la réception de signaux de navigation GNSS émis par une constellation de satellites, les signaux de navigation étant modulés par un code et le récepteur comportant une réplique locale du code, le procédé étant caractérisé en ce qu'il comporte les étapes suivantes :

a. Estimer des positions successives du récepteur à différents instants de mesure de position,

b. Identifier un segment de trajectoire R1 passant à proximité des positions estimées successives,

c. Déterminer des fonctions d'auto-corrélation successives entre les signaux de navigation reçus et la réplique locale du code,

d. Faire une hypothèse de vitesse de déplacement du récepteur sur le segment de trajectoire R1 identifié,

e. Déduire de l'hypothèse de vitesse de déplacement du récepteur, une fonction de retard Doppler correspondant au mouvement du récepteur,

f. Appliquer la fonction de retard Doppler à chaque fonction d'auto-corrélation déterminée à l'étape c et en déduire des fonctions d'auto-corrélation corrigées,

g. Sommer les fonctions d'auto-corrélation corrigées, le résultat de la sommation correspondant à la fonction d'auto-corrélation corrigée $\hat{R}(\tau)$ du signal de navigation,

h. Comparer le résultat de la sommation des fonctions d'auto-corrélation corrigées $\hat{R}(\tau)$ avec une fonction d'auto-corrélation théorique $R_{Theo}(\tau)$ et en déduire un indicateur de confiance que le segment de trajectoire identifié correspond à la trajectoire réelle suivie par le mobile équipé du récepteur.

Avantageusement, l'indicateur de confiance est un critère quadratique $||\hat{R}(\tau) - R_{Theo}(\tau)||^2$ correspondant à la norme au carré de la différence entre le résultat de la sommation des fonctions d'auto-corrélation corrigées et la fonction d'auto-corrélation théorique.

Optionnellement, le procédé peut comporter une étape supplémentaire consistant à faire plusieurs hypothèses de vitesse de déplacement du récepteur différentes, à déterminer un indicateur de confiance correspondant à chaque hypothèse de vitesse, et à sélectionner l'hypothèse de vitesse ayant un indicateur de confiance le plus élevé.

Alternativement, la vitesse de déplacement du récepteur peut être mesurée par un capteur inertiel.

Avantageusement, l'indicateur de confiance est déterminé pour chaque satellite de la constellation.

D'autres particularités et avantages de l'invention apparaîtront clairement dans la suite de la description donnée à titre d'exemple purement illustratif et non limitatif, en référence aux dessins schématiques annexés qui représentent :

- figure 1 : un schéma d'un exemple de système routier typique, selon l'invention ;

- figure 2 : Un exemple illustrant la détermination de la position d'un mobile équipé d'un récepteur GNSS, selon l'invention ;
- figures 3a, 3b, 3c : trois schémas illustrant un exemple d'évolution d'une fonction d'auto-corrélation d'un signal GPS, selon l'invention ;
- figure 4 : un schéma illustrant le procédé de détermination d'un indicateur de confiance relatif à la trajectoire d'un mobile, selon l'invention.

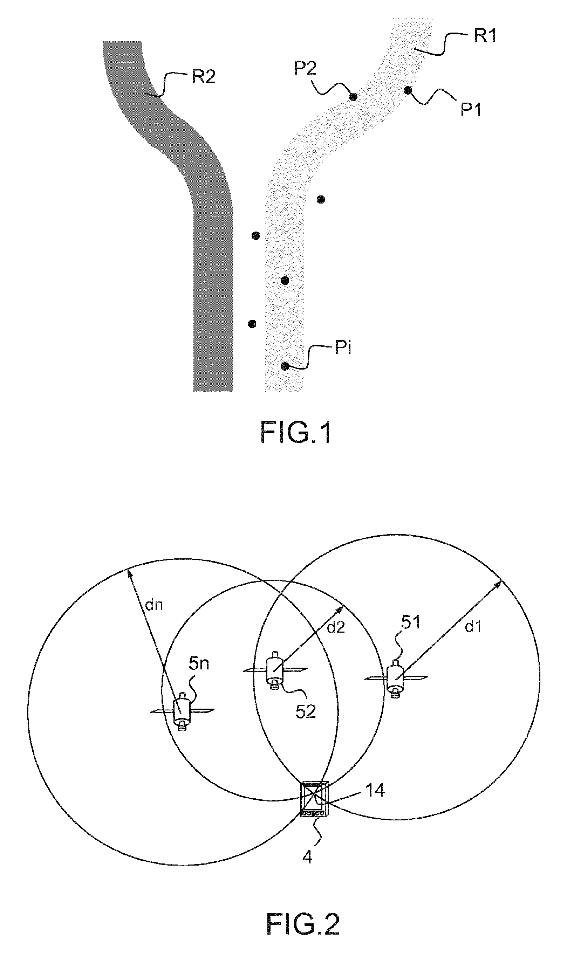

La figure 1 représente un schéma d'un exemple de système routier typique comportant deux routes R1, R2 possibles. La route R1 est une route payante, la route R2 est non payante. Plusieurs mobiles équipés d'un récepteur GNSS, circulent sur la route R1 payante. Les positions P1 à Pi, où i est un nombre entier supérieur à 1, des différents mobiles déterminées par les récepteurs GNSS de chaque mobile, sont affectées d'erreurs. Les erreurs commises peuvent induire une erreur de jugement quant à la route empruntée et par suite une fausse facturation.

Un exemple de détermination de la position d'un mobile équipé d'un récepteur GNSS 4 est représenté schématiquement sur la figure 2. Le récepteur 4 détermine les distances d1, d2,..., dn, où n est un nombre entier supérieur ou égal à quatre, le séparant d'au moins quatre satellites 51, 52,..., 5n de la constellation, seuls trois satellites sont représentés sur la figure 2, puis en déduit le point d'intersection 14 d'au moins quatre sphères, centrées respectivement sur les quatre satellites et ayant une circonférence passant par le récepteur 4, chaque sphère ayant un centre matérialisé par la position d'un satellite 51 à 5n de la constellation et ayant un rayon correspondant à l'une des distances d1 à dn. La position du récepteur GNSS 4, donc du mobile équipé de ce récepteur 4, correspond à ce point d'intersection 14. La mesure des distances d1 à dn est réalisée dans le récepteur 4 par chronométrage du temps d'arrivée de signaux radioélectriques constituant un message de navigation provenant des satellites 51 à 5n. Les signaux radioélectriques émis par chaque satellite sont constitués d'informations nécessaires au calcul de la position du récepteur, ces informations étant modulées par un code qui peut par exemple être un code d'étalement pseudo-aléatoire périodique. Le débit des informations est plus lent que le débit du code. A titre d'exemple, dans le cas d'un signal GPS, un code d'étalement possède une période de 1 ms et un débit de 1023 bits par seconde alors que le débit des informations est de 50bits par seconde. L'ensemble des données ajoutées modulo 2 au code d'étalement est transmis sur une porteuse. Typiquement, dans le cas d'un signal GPS, la porteuse est égale à 1,57542GHz. Les informations essentielles provenant de chaque satellite via le message de navigation et que doit traiter le récepteur 4 sont constituées par l'heure d'émission du message et la position du satellite à l'instant de l'émission du signal radioélectrique. D'autres informations sont également transmises par le satellite, telles que certaines corrections à apporter à l'horloge de bord du satellite, des paramètres de corrections de vitesse de propagation des signaux dans les couches de l'atmosphère terrestre et les positions approximatives des autres satellites de la constellation via des données dites d'almanachs. Le satellite transmet dans son message de navigation ses éphémérides (paramètres Kepleriens) permettant au récepteur 4 de calculer la position du satellite dans un référentiel lié à la Terre. Les éphémérides sont constituées dans le cas d'un signal GPS de 16 paramètres répétés toutes les 30 secondes dans le message de navigation.

La position du satellite étant obtenue, il reste au récepteur 4 à détecter l'heure d'émission du message afin de déduire le temps de propagation du signal émis par le satellite correspondant, la distance le séparant dudit satellite et le rayon de la sphère correspondante. L'heure d'émission du message est incluse dans le message de navigation diffusé par le satellite et dans le cas d'un système GPS, est répétée toutes les six secondes. Cependant il convient d'appliquer à l'heure lue dans le message de navigation une correction d'horloge satellitaire afin de ramener l'heure transmise dans un système de référence commun à tous les satellites. Cette correction est transmise toutes les trente secondes. Lorsque l'heure d'émission du message est décodée et corrigée, le récepteur déduit le temps de propagation du signal radioélectrique par différence entre l'heure de réception et l'heure d'émission du message de navigation. Cette information, corrigée des erreurs de vitesse de propagation des signaux dans les différentes couches de l'atmosphère terrestre telles que l'Ionosphère, fournit au récepteur une estimation de la distance le séparant du satellite. En utilisant les signaux provenant d'au moins quatre satellites 51 à 5n de la constellation, le récepteur 4 en déduit sa position, et donc celle du mobile dans lequel il se trouve, par une méthode connue de triangulation.

La détermination de l'heure de réception du signal GNSS, comme tout signal à spectre étalé, s'effectue par calcul de la fonction d'auto-corrélation entre le signal reçu et une réplique locale du code d'étalement correspondant au satellite recherché. Dans le cas d'un signal GPS, la fonction d'auto-corrélation est une fonction en forme de triangle dont la position temporelle du sommet indique l'instant de réception du signal. Cet instant de réception est alors utilisé dans le procédé de triangulation.

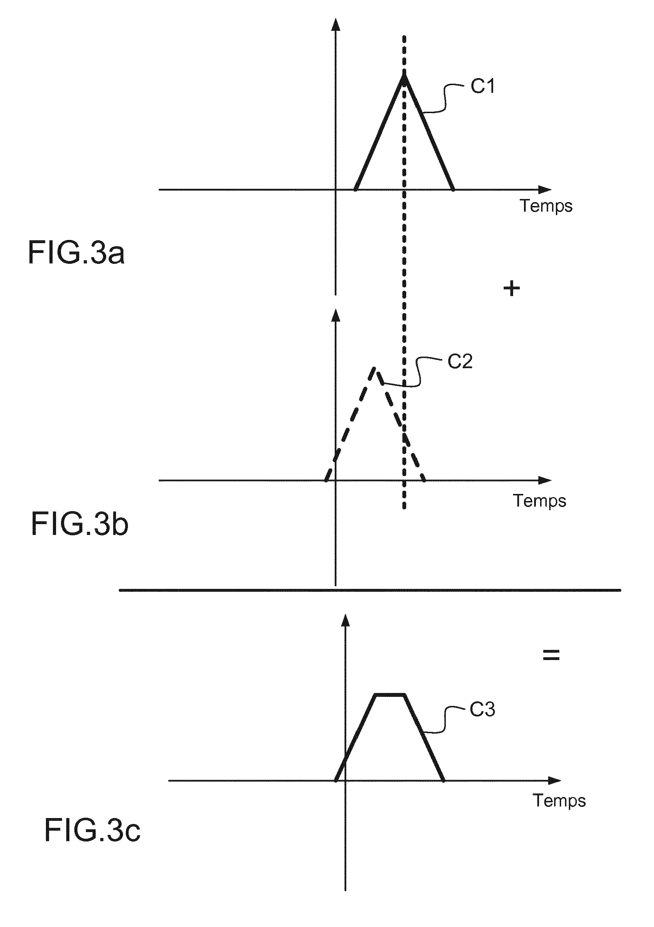

La fonction d'auto-corrélation d'un signal GPS est schématiquement représentée sur les figures 3a et 3b pour deux instants t1 et t2 successifs. Comme le montrent ces deux figures, les fonctions d'auto-corrélation C1 et C2 du signal GPS calculée à un instant t1 et à un instant t2 supérieur à l'instant t1, sont déplacées, comme indiqué sur la figure 3b, en une autre position temporelle. La position du pic de corrélation varie au cours du temps en raison du mouvement relatif du satellite par rapport au récepteur 4 du mobile et donc de l'évolution de la distance entre le satellite et le récepteur 4. Ce phénomène connu sous le nom d'effet Doppler sur le code d'étalement est dû à trois causes différentes qui sont le mouvement du satellite, le mouvement du récepteur et dans une moindre mesure, les erreurs d'horloge du récepteur.

Le mouvement du satellite par rapport au récepteur, considéré immobile, peut être compensé, de sorte que ce mouvement n'ait plus d'impact sur le déplacement du pic d'auto-corrélation. La vitesse de déplacement du pic de corrélation due au déplacement du satellite s'exprime sous la forme $\dfrac{V_r}{c}$ où Vr est la vitesse radiale du satellite par rapport au récepteur 4 et c la vitesse de la lumière.

La vitesse radiale Vr du satellite est calculée à partir de la distance séparant le satellite du récepteur 4 en utilisant les éphémérides transmises par le satellite. La distance $d(t)$ entre le satellite et le récepteur à un instant t se déduit directement par le calcul de la norme du vecteur reliant la position du satellite à la position du récepteur. Le même calcul opéré à un instant ultérieur $t + \delta t$ permet d'évaluer la distance entre le satellite et le récepteur à l'instant $t + \delta t$, c'est-à-dire $d(t + \delta t)$. La vitesse radiale s'exprime alors sous la forme

$$V_r = \frac{d(t + \delta t) - d(t)}{\delta t}.$$ Pour ce calcul $\delta t$ doit être choisi petit, par exemple de l'ordre de la seconde. Dans le cas d'un système GPS, le code d'étalement durant 1ms, le récepteur 4 procède au calcul de la fonction d'auto-corrélation toutes les millisecondes. Chaque milliseconde, la position du pic de corrélation se déplace ainsi de la quantité temporelle $\delta\tau = 10^{-3} x \dfrac{V_r}{c}$

Si $R_k(\tau)$ représente la fonction d'auto-corrélation calculée à l'instant $\tau$ après la kième milliseconde, où k est un nombre entier supérieur à 1 et où $\tau$ correspond à une estimation du temps d'arrivée du signal, la compensation du mouvement du satellite est réalisée en appliquant un retard à cette fonction d'auto-corrélation, le retard étant égal à $k * 10^{-3} \dfrac{V_r}{c}$, pour maintenir le pic de corrélation à la position initiale.

Pour faciliter le processus d'estimation de la position du pic d'auto-corrélation $R(\tau)$, cette estimation est effectuée à partir d'une somme non cohérente d'une succession de N fonctions d'auto-corrélation, où N est le nombre de mesures de position réalisé pendant la durée totale de mesure.

$$R(\tau) = \sum_{k=1}^{N} R_k(\tau)$$

Lorsque l'effet Doppler n'est pas compensé, la fonction d'auto-corrélation ne présente pas un pic mais un sommet aplati, comme le montre le résultat C3 de la sommation des fonctions d'auto-corrélation C1 + C2 représenté sur la figure 3c. Cet effet a un impact très dommageable sur l'estimation de l'heure d'arrivée du signal GPS. Pour remédier à ce problème et corriger l'effet Doppler dû au mouvement du satellite, il convient donc d'appliquer, à chaque fonction d'auto-corrélation calculée, le retard de $k * 10^{-3} \dfrac{V_r}{c}$ indiqué ci-dessus, et donc de calculer la quantité suivante :

$$\tilde{R}(\tau) = \sum_{k=1}^{N} R_k\left(\tau - kx\frac{V_r}{c}x10^{-3}\right)$$

Cette opération permet alors de compenser l'effet Doppler dû au mouvement du satellite et de retrouver, pour un récepteur immobile, un pic de corrélation en forme de triangle.

L'effet Doppler dû au déplacement du récepteur 4 ne peut généralement pas être compensé et est donc subi. Cet effet Doppler s'applique sur le code d'étalement du récepteur qui est décalé par rapport au code d'étalement du satellite ce qui se traduit par une déformation du pic de corrélation comme dans le cas concernant l'erreur due au mouvement du satellite. Pour limiter l'erreur induite par cet effet Doppler, la durée de sommation des fonctions d'auto-corrélation est limitée de façon à limiter la déformation du pic de corrélation.

Pour corriger l'effet Doppler dû au déplacement du récepteur 4, Il conviendrait en effet d'opérer la sommation suivante :

$$\hat{R}(\tau) = \sum_{k=1}^{N} R_k\big(f(\tau)\big)$$

où $f(\tau)$ est une fonction qui dépend du mouvement du récepteur 4 alors que ce mouvement du récepteur est inconnu.

Si l'on note $P(t)$ la position vraie du récepteur à un instant t, et $X_s(t)$ la position du satellite à l'instant t, alors la vitesse radiale relative entre le satellite et le récepteur s'exprime $V_r = \dfrac{d\big(\|P(t) - X_s(t)\|\big)}{dt}$, et la fonction $f(\tau)$ est déterminée par la relation suivante :

$$f(\tau) = \tau - kx\frac{1}{c}\frac{d\big(\|P(t) - X_s(t)\|\big)}{dt}x10^{-3}$$

Pour déterminer un indicateur de confiance concernant la trajectoire estimée par le récepteur GNSS 4 et concernant donc la route empruntée par un mobile équipé du récepteur 4, le procédé selon l'invention consiste alors, à partir des signaux émis par la constellation de satellite, à estimer les positions du récepteur à différents instants successifs selon une méthode par triangulation comme indiqué ci-dessus, puis à partir des positions estimées, à faire une hypothèse de trajectoire suivie par le mobile équipé du récepteur 4, l'hypothèse de trajectoire consistant en une sélection d'un segment de route passant à proximité des différentes positions estimées, le segment de route sélectionné pouvant par exemple être une route à péage R1 soumise à facturation ou une route sans péage R2. Pour faire l'hypothèse de trajectoire, le récepteur 4 comporte des moyens de cartographie lui permettant de connaître la topologie routière au voisinage des positions estimées. Le récepteur 4 fait ensuite une hypothèse d'une vitesse de déplacement du récepteur sur le segment de route sélectionné, et en déduit un temps T de parcours réalisé sur ledit segment de route sélectionné, $T = \dfrac{L}{V}$ où V représente ladite vitesse du récepteur et L la longueur dudit segment de route. Le récepteur 4 en déduit la fonction $f(\tau)$ en utilisant l'équation $f(\tau) = \tau - kx\dfrac{1}{c}\dfrac{d\big(\|P(t) - X_s(t)\|\big)}{dt}x10^{-3}$ et, en utilisant l'équation $\hat{R}(\tau) = \sum_{k=1}^{N} R_k\big(f(\tau)\big)$, calcule la fonction $\hat{R}(\tau)$ correspondant à la fonction d'auto-corrélation moyennant les hypothèses faites, du signal de navigation, par exemple GPS, après correction de l'effet Doppler dû au déplacement du récepteur 4 sur le segment de route, en sommant les fonctions d'auto-corrélation obtenues à chaque instant de mesure de position $\tau$, tout au long de la trajectoire sélectionnée, c'est à dire en prenant $N = \dfrac{T}{10^{-3}}$ dans le cas du GPS. Le récepteur calcule ensuite un indicateur de confiance correspondant à un indice de vraisemblance que la fonction d'auto-corrélation corrigée $\hat{R}(\tau)$ a une forme en triangle et correspond à une fonction d'auto-corrélation théorique $R_{Theo}(\tau)$. L'indicateur de confiance peut s'exprimer sous la forme d'un critère quadratique tel que par exemple $\|\hat{R}(\tau) - RTheo(\tau)\|^2$ Cet indicateur de confiance doit être déterminé pour chaque satellite de la constellation.

Pour la même hypothèse de trajectoire, le récepteur peut émettre successivement plusieurs hypothèses de vitesse différentes et pour chaque hypothèse de vitesse, déterminer une valeur correspondante de l'indicateur de confiance, le récepteur ne conservant que l'hypothèse de vitesse correspondant à l'indicateur de confiance le plus élevé.

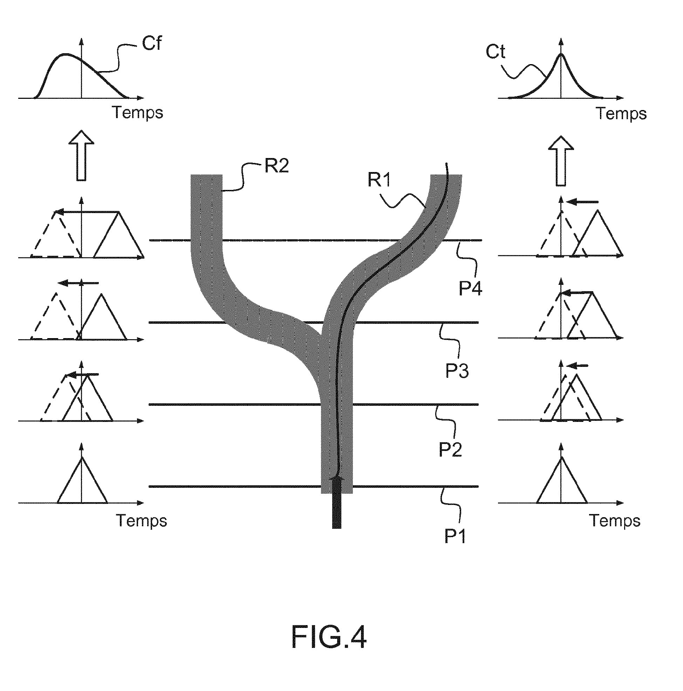

La figure 4 illustre l'effet de la correction de l'effet Doppler dû au mouvement du récepteur dans le cas où l'hypothèse de trajectoire est la trajectoire réelle suivie par le mobile équipé du récepteur 4 et dans le cas où la trajectoire ne correspond pas à la trajectoire réelle. Le segment de route R1 fait l'objet d'une facturation et correspond à la route empruntée par un utilisateur mobile, alors que le segment de route R2 ne fait pas l'objet de facturation. Pour les deux hypothèses et pour différents instants de mesure successifs correspondant à quatre positions P1, P2, P3, P4 différentes du mobile sur les segments de route correspondant, les fonctions d'auto-corrélation avant correction de l'effet Doppler sont représentées en traits pleins et les fonctions d'auto-corrélation après correction sont représentées en traits pointillés. Les flèches horizontales représentent le déplacement temporel des différentes fonctions d'auto-corrélation après la correction.

Le récepteur compare la vraisemblance d'avoir emprunté le segment de route R1 par rapport au segment de route R2. Cette figure 4 montre que dans le cas où le récepteur fait l'hypothèse d'avoir emprunté le segment de route R1 qui correspond à la trajectoire réelle du mobile, la fonction d'auto-corrélation Ct résultante, après correction, de l'effet Doppler sur le code d'étalement du récepteur, correspond à une fonction ressemblant fortement à la fonction d'auto-corrélation théorique en forme de triangle. Dans le cas où le récepteur fait l'hypothèse d'avoir emprunté le segment de route R2 qui ne correspond pas à la trajectoire réelle du mobile, la fonction d'auto-corrélation Cf résultante, après correction de l'effet Doppler sur le code d'étalement du récepteur, est très éloignée de la fonction d'auto-corrélation théorique en forme de triangle.

Alternativement, pour une même hypothèse de trajectoire sélectionnée, au lieu de faire des hypothèses de vitesse de déplacement du récepteur, le récepteur peut être équipé d'un capteur inertiel, lui permettant d'estimer ses déplacements relatifs et par suite sa vitesse de déplacement sur un segment de route correspondant de la trajectoire. Dans ce cas, la fonction $f(\tau)$ est obtenue par la relation $f(\tau) = \tau - \dfrac{V_r + V_I}{c} * 10^{-3} * k$ où $V_I$ est la vitesse radiale estimée par le capteur inertiel. Le procédé comporte alors les différentes étapes indiquées ci-dessus, à l'exception de la vitesse du récepteur qui n'est plus une hypothèse mais une estimation élaborée par un capteur inertiel.

Enfin, le procédé selon l'invention, peut comporter une étape additionnelle consistant à faire une hypothèse supplémentaire concernant la dérive de l'horloge locale du récepteur. Cette hypothèse supplémentaire consiste à moduler la vitesse radiale relative entre le récepteur et le satellite.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de détermination d'un indicateur de confiance relatif à la trajectoire d'un mobile équipé d'un récepteur apte à estimer la position du mobile à partir de la réception de signaux de navigation GNSS émis par une constellation de satellites, les signaux de navigation étant modulés par un code et le récepteur (4) comportant une réplique locale du code, le procédé comportant une étape préliminaire consistant à estimer des positions successives du récepteur (4) à différents instants de mesure de position et à identifier un segment de trajectoire R1 passant à proximité des positions estimées successives, le procédé étant **caractérisé en ce que** le segment de trajectoire R1 est estimé à l'aide de moyens de cartographie et **en ce qu'**il comporte en outre les étapes suivantes :

   a. Déterminer des fonctions d'auto-corrélation successives entre les signaux de navigation reçus et la réplique locale du code,
   b. Faire une hypothèse de vitesse de déplacement du récepteur (4) sur le segment de trajectoire R1 identifié,
   c. Déduire de l'hypothèse de vitesse de déplacement du récepteur, une fonction de retard Doppler correspondant au mouvement du récepteur (4),
   d. Appliquer la fonction de retard Doppler à chaque fonction d'auto-corrélation déterminée à l'étape c et en déduire des fonctions d'auto-corrélation corrigées,
   e. Sommer les fonctions d'auto-corrélation corrigées, le résultat de la sommation correspondant à la fonction d'auto-corrélation corrigée $\hat{R}(\tau)$ du signal de navigation,
   f. Comparer le résultat de la sommation des fonctions d'auto-corrélation corrigées $\hat{R}(\tau)$ avec une fonction d'auto-corrélation théorique $R_{Theo}(\tau)$ et en déduire un indicateur de confiance que le segment de trajectoire identifié correspond à la trajectoire réelle suivie par le mobile équipé du récepteur (4).

2. Procédé de détermination d'un indicateur de confiance selon la revendication 1, **caractérisé en ce que** l'indicateur de confiance est un critère quadratique $||\hat{R}(\tau) - R_{Theo}(\tau)||^2$ correspondant à la norme au carré de la différence entre le résultat de la sommation des fonctions d'auto-corrélation corrigées et la fonction d'auto-corrélation théorique.

3. Procédé selon l'une des revendications 1 ou 2, **caractérisé en ce qu'**il consiste à faire plusieurs hypothèses de vitesse de déplacement du récepteur (4) différentes, à déterminer un indicateur de confiance correspondant à chaque hypothèse de vitesse, et à sélectionner l'hypothèse de vitesse ayant un indicateur de confiance le plus élevé.

4. Procédé selon l'une des revendications 1 ou 2, **caractérisé en ce que** la vitesse de déplacement du récepteur (4) est mesurée par un capteur inertiel.

5. Procédé selon l'une des revendications précédentes, **caractérisé en ce que** l'indicateur de confiance est déterminé pour chaque satellite de la constellation.

**Patentansprüche**

1. Verfahren zur Bestimmung einer Verlässlichkeitsanzeige in Bezug auf die Bewegungsbahn eines mobilen Geräts, das mit einem Empfänger ausgestattet ist, der imstande ist, die Position des mobilen Geräts ausgehend vom Empfang von GNSS-Navigationssignalen zu schätzen, die von einer Satellitenkonstellation gesendet werden, wobei die Navigationssignale von einem Code moduliert werden und der Empfänger (4) eine lokale Replik des Codes aufweist, wobei das Verfahren einen vorbereitenden Schritt aufweist, der darin besteht, aufeinanderfolgende Positionen des Empfängers (4) zu verschiedenen Momenten der Positionsmessung zu schätzen und ein Bewegungsbahnsegment R1 zu identifizieren, das in der Nähe der geschätzten aufeinanderfolgenden Positionen verläuft, wobei das Verfahren **dadurch gekennzeichnet ist, dass** das Bewegungsbalmsegment R1 mit Hilfe von Kartographiemitteln geschätzt wird und dass es ferner die folgenden Schritte umfasst:

a. Bestimmen der aufeinanderfolgenden Autokorrelationsfunktionen zwischen den empfangenen Navigationssignalen und der lokalen Replik des Codes,
b. Erarbeiten einer Hypothese der Verlagerungsgeschwindigkeit des Empfängers (4) auf dem identifizierten Bewegungsbahnsegment R1,
c. Ableiten aus der Hypothese der Verlagerungsgeschwindigkeit des Empfängers einer Doppler-Retardfunktion, die der Bewegung des Empfängers (4) entspricht,
d. Anwenden der Doppler-Retardfunktion auf jede im Schritt c) bestimmte Autokorrelationsfunktion und Ableiten daraus von korrigierten Autokorrelationsfunktionen,
e. Summieren der korrigierten Autokorrelationsfunktionen, wobei das Ergebnis der Summierung der korrigierten Autokorrelationsfunktion $\hat{R}(\tau)$ des Navigationssignals entspricht,
f. Vergleichen des Ergebnisses der Summierung der korrigierten Autokorrelationsfunktionen $\hat{R}(\tau)$ mit einer theoretischen Autokorrelationsfunktion $R_{Theo}(\tau)$ und Ableiten daraus eine Verlässlichkeitsanzeige, dass das identifizierte Bewegungsbahnsegment der tatsächlichen Bewegungsbahn entspricht, die von dem mit dem Empfänger (4) ausgestatteten mobilen Gerät verfolgt wird.

2. Verfahren zur Bestimmung einer Verlässlichkeitsanzeige nach Anspruch 1, **dadurch gekennzeichnet, dass** die Verlässlichkeitsanzeige ein quadratisches Kriterium $\|\hat{R}(\tau)-R_{Theo}(\tau)\|^2$ ist, das der Norm zum Quadrat der Differenz zwischen dem Ergebnis der Summierung der korrigierten Autokorrelationsfunktionen und der theoretischen Autokorrelationsfunktion entspricht.

3. Verfahren nach einem der Ansprüche 1 oder 2, **dadurch gekennzeichnet, dass** es darin besteht, mehrere unterschiedliche Hypothesen der Verlagerungsgeschwindigkeit des Empfängers (4) zu erarbeiten, eine Verlässlichkeitsanzeige zu bestimmen, die jeder Geschwindigkeitshypothese entspricht und die Geschwindigkeitshypothese auszuwählen, die die höchste Verlässlichkeitsanzeige hat.

4. Verfahren nach einem der Ansprüche 1 oder 2, **dadurch gekennzeichnet, dass** die Verlagerungsgeschwindigkeit des Empfängers (4) mit einem Trägheitssensor gemessen wird.

5. Verfahren nach einem der vorangehenden Ansprüche, **dadurch gekennzeichnet, dass** die Verlässlichkeitsanzeige für jeden Satelliten der Konstellation bestimmt wird.

**Claims**

1. A method for determining a confidence indicator relating to the trajectory of a moving object equipped with a receiver capable of estimating the position of said moving object on the basis of the reception of GNSS navigation signals transmitted by a satellite constellation, said navigation signals being modulated by a code and said receiver (4) comprising a local replica of said code, said method comprising a preliminary step that involves estimating successive positions of said receiver (4) at various position measurement instants and identifying a trajectory segment R1 passing in the vicinity of the successive estimated positions, said method being **characterised in that** said trajectory segment R1 is estimated using mapping means and **in that** it further comprises the following steps:

a. determining successive auto-correlation functions between said received navigation signals and said local replica of said code;

b. making an assumption with respect to the displacement speed of said receiver (4) over the identified trajectory segment R1;

c. deducing a Doppler delay function, from the assumption with respect to the displacement speed of said receiver, that corresponds to the movement of said receiver (4);

d. applying said Doppler delay function to each auto-correlation function determined during step c and deducing corrected auto-correlation functions therefrom;

e. adding said corrected auto-correlation functions, with the result of the addition corresponding to the corrected auto-correlation function $\hat{R}(\tau)$ of said navigation signal;

f. comparing the result of the addition of said corrected auto-correlation functions $\hat{R}(\tau)$ with a theoretical auto-correlation function $R_{Theo}(\tau)$ and deducing therefrom a confidence indicator that the identified trajectory segment corresponds to the actual trajectory followed by said moving object equipped with said receiver (4).

2. The method for determining a confidence indicator according to claim 1, **characterised in that** said confidence indicator is a quadratic criterion. $\|\hat{R}(\tau)-R_{Theo}(\tau)\|^2$ corresponding to the squared norm of the difference between the result of the addition of the corrected auto-correlation functions and the theoretical auto-correlation function.

3. The method according to any one of claims 1 to 2, **characterised in that** it involves making a plurality of different assumptions with respect to the displacement speed of said receiver (4), determining a confidence indicator that corresponds to each speed hypothesis and selecting the speed assumption with the highest confidence indicator.

4. The method according to any one of claims 1 to 2, **characterised in that** the displacement speed of said receiver (4) is measured by an inertial sensor.

5. The method according to any one of the preceding claims, **characterised in that** said confidence indicator is determined for each satellite of said constellation.

FIG.1

FIG.2

FIG.3a

FIG.3b

FIG.3c

FIG.4

**EP 2 626 725 B1**

## RÉFÉRENCES CITÉES DANS LA DESCRIPTION

**Documents brevets cités dans la description**

- US 20100332125 A